# EUROPEAN PATENT APPLICATION

(11) **EP 2 441 971 A1**
(43) Date of publication of application: **18.04.2012**
(21) Application number: 10425335.6
(22) Date of filing: 18.10.2010
(51) Int. Cl.: F16B 23/00

(54) **A screw for precision tightening**

(71) Applicant: Fontana R.D. S.r.l., 20837 Veduggio con Colzano (Monza e Brianza) (IT)
(72) Inventor: Fontana, Luigi, 20050 Veduggio con Colzano (Monza e Brianza) (IT)
(74) Representative: Gerbino, Angelo

(57) **Abstract**

The screw (10) comprises a threaded shank (12) and a head (14) in which is formed a recess (16) which is intended to be engaged by a tightening tool and which has a multi-lobed external profile comprising a series of circumferentially spaced-apart, radial lobes (20) each of which is delimited by two radial sides (24) that are contained in respective planes extending through the longitudinal axis (18) of the screw (10), and by a central face (26) which joins the radially outer ends of the sides (24). The radially inner ends of contiguous sides (24) of adjacent lobes (20) are joined by respective connecting surfaces each of which has a V-shaped profile formed by two inclined faces (28) which join at a corner (30) which faces towards the longitudinal axis (18).

## Description

The present invention relates to a screw for precision tightening.

In greater detail, a screw of this type comprises a threaded shank and a head in which is formed a recess which is intended to be engaged by a tightening tool and which has a multi-lobed external profile comprising a series of circumferentially spaced-apart, radial lobes each of which is delimited by two radial sides that are contained in respective planes extending through the longitudinal axis of the screw, and by a central face which joins the radially outer ends of the sides, the radially inner ends of adjacent sides of juxtaposed lobes being joined by respective connecting surfaces.

Known screws of the type indicated above (which are described, for example in Italian patent IT-1 245 285) are operated by special tightening tools, that is, tools having a shape complementary to that of the recess and having a central core from which a plurality of circumferentially spaced-apart teeth protrude radially for insertion in respective lobes of the recess. Upon rotation of the tool, each tooth can consequently come into contact with a side of the corresponding lobe in correspondence of a two-dimensional surface and not merely of a line and is thus able to transmit a high torque.

However, a tightening tool having this particular shape is not always immediately and readily available so that it is sometimes necessary to use conventional tools, for example, a hexagonal key, to tighten a screw with a hollow head having six uniformly-spaced lobes. In fact, in any plane perpendicular to the longitudinal axis of the screw, the outlines of the connecting surfaces typically correspond to the central portions of the sides of a regular hexagon having its centre on the axis of the screw, so that the hexagonal key can be inserted in the central portion of the recess. When the key is rotated for tightening, each side of the hexagon comes into contact with a corner of the lateral surface of the recess along a line parallel to the longitudinal axis of the screw. Given the smallness of the contact surface, the torque that can be transmitted is consequently markedly less than can be achieved with the use of a more sophisticated tool.

The object of the present invention is therefore to enable a screw with a shaped hollow head to be tightened, even without the availability of a tightening tool of a shape exactly complementary to that of the recess, and nonetheless with the transmission of a high torque.

According to the invention, this object is achieved by means of a screw of the type indicated at the beginning of this description, characterized in that each connecting surface has a V-shaped profile formed by two inclined faces which join at a corner facing towards the above-mentioned longitudinal axis.

In use, after a conventional hexagonal key has been inserted in a recess with six uniformly-spaced lobes of a screw of the invention, the rotation of the key causes each side of its hexagonal external profile to come into contact with one of the two inclined faces which form the V-shaped profile of the associated connecting surface in correspondence of a two-dimensional surface and not merely of a line.

It is thus possible to transmit torques which, although not as high as with the use of a specific tightening tool, are nevertheless markedly higher than those which can be transmitted as a result of a linear contact.

The screw of the invention therefore ensures good performance even if the user does not have sophisticated tightening tools.

Further advantages and features of the present invention will become clear from the following detailed description which is provided by way of non-limiting example with reference to the appended drawings, in which:
Figure 1 is a partially sectioned, perspective view of a screw according to the present invention,
Figure 2 is a cross-section taken on the line II-II through the screw of Figure 1, in the head of which a tightening tool is fitted,
Figure 3 is a longitudinal section taken on the line III-III through the screw of the preceding drawings, in the head of which a transducer is fitted,
Figure 4 is a cross-section similar to Figure 2 through a screw of the prior art, and
Figure 5 is a longitudinal section similar to Figure 3 through a further embodiment of the screw of the invention.

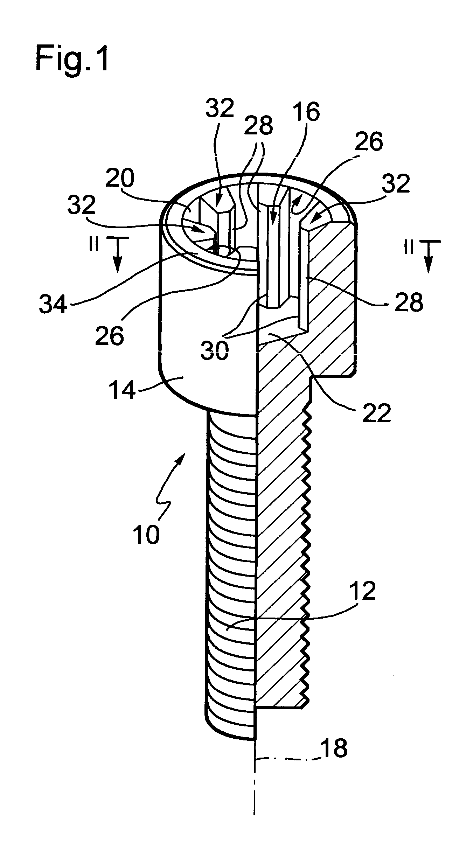

A screw 10 for precision tightening (Figure 1) comprises a threaded shank 12 and a head 14 in which a recess 16 is formed for engagement by a tightening tool.

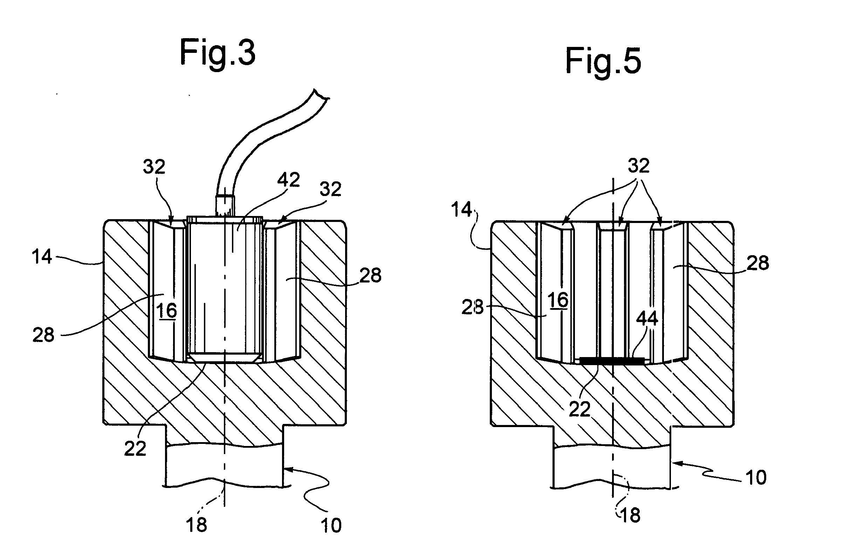

The recess 16 has a multi-lobed external profile and comprises a central portion which extends around the longitudinal axis 18 of the screw 10 and from which six circumferentially uniformly-spaced lobes 20 extend radially. The surface 22 of the central portion of the base of the recess 16 is flat (Figure 3).

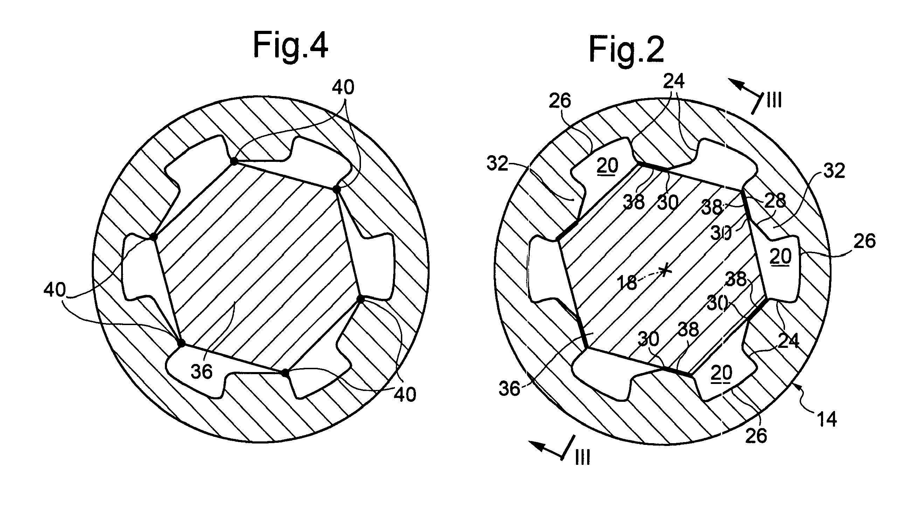

Each lobe 20 is delimited (Figure 2) by two radial sides 24 which are contained in respective planes extending through the longitudinal axis 18 of the screw 20 and by a central face 26 which joins the radially outer ends of the sides 24. Typically, in any plane perpendicular to the longitudinal axis 18, the outlines of the central faces 26 of the various lobes 20 constitute respective arcs of a common circle.

The radially inner ends of contiguous sides 24 of adjacent lobes 20 are joined by respective connecting surfaces each of which has a V-shaped profile formed by two inclined faces 28 which join at a corner 30 facing towards the axis 18, forming an angle α of an amplitude advantageously between 70° and 170°. A respective tooth 32 which projects from an outer circular ring 34 of the head 14 thus protrudes between each pair of adjacent lobes 20. In particular, each tooth 32 is delimited by the contiguous sides 24 of the adjacent lobes 20 and by the inclined faces 28 of the respective connecting surface, so as to have a convex shape.

The V-shaped profile of each connecting surface is advantageously symmetrical since it is formed by two faces 28 of equal length and inclination. The extent of each connecting surface in the radial direction is a fraction, preferably of between 5 and 20%, of the overall radial extent of the respective tooth 32.

The corner joining each face 28 of the V-shaped profile to the respective side 24 is advantageously rounded.

Moreover, the top surfaces of the teeth as well as the adjacent surfaces of the outer ring 34 of the head 14 are bevelled, that is inclined to a horizontal plane, to facilitate the insertion of a tightening screw in the recess 16.

The screws 10 of the invention can be tightened by specific tightening tools, that is, tools of a shape complementary to that of the recess 16 and having a central core from which a plurality of circumferentially spaced-apart teeth suitable for insertion in respective lobes 20 of the recess 16 protrude radially. From this point of view, the screws 10 of the invention are wholly analogous to the known screws described in Italian patent IT-1 245 285 and can be tightened with very high torques.

At the same time, the screws 10 of the invention are markedly advantageous in comparison with conventional screws when they are tightened with conventional tools, in particular, a hexagonal key 36 (Figure 2).

In this case, once the key 36 has been inserted in the recess 16 and rotated, each side of its hexagonal outer profile comes into contact with one of the two inclined faces 28 which form the V-shaped profile of the associated connecting surface in correspondence of a two-dimensional surface (see reference numerals 38 which mark the linear outlines of these surfaces in the transverse section plane).

It is thus possible to transmit torques which, although not as high as with the use of a specific tightening tool, are nevertheless markedly higher than those which can be transmitted as a result of a linear contact, as is the case with a known screw (see reference numerals 40 in Figure 3 which mark the dot-like traces of these contact lines in the transverse section plane).

In experimental tests, it was possible to tighten M10 X 1.25 screws of the invention by means of a conventional hexagonal key 36 with a torque equal to 125 Nm, that is, a value 30% higher than the torque of 95 Nm which can be transmitted with the same key 36 to a homologous conventional screw. It was therefore proved experimentally that the screw 10 of the invention ensures good performance even if the user does not have sophisticated tightening tools.

Moreover, as shown in Figure 3, the flat surface 22 of the base of the recess 16 can advantageously be coupled with a mobile transducer 42 of an ultrasound device known *per* se for measuring the axial tension of the screw 10.

The use of these devices is in fact becoming ever more widespread in fields, for example motor propulsion and aeronautics, in which it is critical to check this tension to ascertain that it actually corresponds to the desired tension at the tightening stage and to monitor any decay in operation.

Alternatively, instead of being mobile, the transducer may be incorporated in the screw 10 as shown in Figure 5. In this case, it is constructed in the form of a thin sheet 44 fixed firmly to the flat surface 22.

Naturally, the principle of the invention remaining the same, the details of construction and forms of embodiment may vary widely with respect to those described purely by way of example, without thereby departing from the scope of the invention as defined in the appended claims.

## Claims

1. A screw (10) for precision tightening comprising a threaded shank (12) and a head (14) in which is formed a recess (16) which is intended to be engaged by a tightening tool and which has a multi-lobed external profile comprising a series of circumferentially spaced-apart, radial lobes (20) each of which is delimited by two radial sides (14) that are contained in respective planes extending through the longitudinal axis (18) of the screw (10), and by a central face (26) which joins the radially outer ends of the sides (24), the radially inner ends of contiguous sides (24) of adjacent lobes (20) being joined by respective connecting surfaces,
the screw (10) being **characterized in that** each connecting surface has a V-shaped profile formed by two inclined faces (28) which join at a corner (30) facing towards the said longitudinal axis (18).

2. A screw (10) according to Claim 1 wherein, between each pair of adjacent lobes (20), there protrudes a respective tooth (32) which projects from an outer circular ring (34) of the head (14), each tooth (32) being delimited by the contiguous sides (24) of the adjacent lobes (20) and by the inclined faces (28) of the respective connecting surface so as to have a convex shape.

3. A screw (10) according to Claim 2 wherein the top surface of each tooth (32) is bevelled.

4. A screw (10) according to any one of the preceding claims, wherein there are six uniformly-spaced lobes (20).

5. A screw (10) according to any one of the preceding claims wherein the V-shaped profile is symmetrical since it is formed by two faces (28) of equal length and inclination.

6. A screw (10) according to any one of preceding Claims 2 to 5 wherein each V-shaped connecting surface has an extent in the radial direction of a fraction of between 5 and 20% of the overall radial extent of the respective tooth (32) in the radial direction.

7. A screw (10) according to any one of the preceding claims wherein the corner joining each face (28) of the V-shaped profile to the respective side (24) is rounded.

8. A screw (10) according to any one of the preceding claims wherein, in any plane perpendicular to the longitudinal axis (18), the outlines of the central faces (26) constitute respective arcs of a common circle.

9. A screw (10) according to any one of the preceding claims wherein the inclined faces (28) which join at the corner (30) form an angle (α) having an amplitude of between 70° and 170°.

10. A screw (10) according to any one of the preceding claims wherein the recess (16) has a central portion which extends around the longitudinal axis (18) and from which the lobes (20) extend radially, the surface (22) of the central portion of the base of the recess (16) being flat.

11. A screw (10) according to Claim 10 in which a transducer (44) is fixed firmly to the flat surface (22).
